# EUROPEAN PATENT SPECIFICATION

(11) **EP 1 544 480 B1**
(45) Date of publication and mention of the grant of the patent: **21.02.2007**
(21) Application number: 04106520.2
(22) Date of filing: 13.12.2004
(51) Int. Cl.: F16B 25/00

(54) **Fixing device**
Befestigungselement
Elément de fixation

(30) Priority: 15.12.2003 NL 1025021
(43) Date of publication of application: 22.06.2005
(73) Proprietor: Borgh B.V., 1305 AD Almere (NL)
(72) Inventor: Rolvink, Antonius Hendrikus, 1305 Almere (NL); Hacker, Harald, 74635 Kupferzell (DE)
(74) Representative: Hooiveld, Arjen Jan Winfried

(56) References cited:
- US-A- 5 957 646
- US-B1- 6 371 709

## Description

The invention relates to a fixing device intended for being secured in a stone, concrete, metal or wooden substrate or the like, which fixing device can be inserted into a bore formed in said substrate, said fixing device comprising a shank which is provided over at least part of its length with a helical groove extending along the circumferential surface thereof, and a helical ridge juxtaposed to said groove, which ridge extends radially with respect to the shank so as to form male screw thread, said groove and said ridge forming a helical configuration whose windings are spaced apart by an intervening land, relative to which the ridge is raised and the groove is depressed.

Such a fixing device is known from European patent publication No. 0 560 789 (Bickford). The ridge of the known fixing device, which is for example made of stainless steel, is self-tapping, in the sense that it cuts screw thread in the circumferential surface of the bore upon being inserted therein. The groove must transport drilling material that is produced during said cutting in axially rearward direction as much as possible.

A drawback of the fixing device as known from European patent publication No. 0 560 789 (Bickford) is the following. As already noted above, the ridge of the fixing device cuts screw thread in the circumferential surface of the bore upon being inserted. Drilling material, for example in the form of dust and drill cuttings, is produced thereby, which material will lodge between the bore and the shank of the fixing device. In practice it has become apparent that the groove of the fixing device does not optimally discharge this drilling material, also referred to as "drilling dust". As a result, the drilling dust is compressed, as a result of which the resistance encountered upon insertion of the fixing device into the bore is increased. Eventually, this may result in the fixing device getting wedged, i.e. the fixing device cannot be inserted into the bore any further, even if the bore has sufficient depth. Another drawback of the known fixing device is the fact that the device is not optimally centred, i.e. positioned out of alignment with the longitudinal axis of the bore, upon being inserted. Not only does this lead to a less secure fixation, but also the transportation in axially rearward direction of the drilling dust is adversely affected. Furthermore, damage is caused to the wall of the bore.

A fixing device as described in the preamble is known from US patent publication no. 5,957,646 (Gianuzzi et al.). A drawback thereof is that the driving torque to secure said fixing device in concrete, for example, is relatively high.

The object of the invention is to overcome the above drawbacks of the prior art, in the sense that a simple and inexpensive fixing device is proposed which can be optimally centred in the bore while using a minimum driving moment.

In order to accomplish that object, a fixing device according to the invention is characterized in that the diameter of the helix of the first ridge is larger than the diameter of the helix of the second ridge. In contrast to the prior art, the aforesaid drilling dust is actually utilized in the present case, thus overcoming the preconception that the presence of drilling dust is problematic. Compressed drilling dust is received in the second groove via the second ridge, with the drilling dust acting as a "lubricating" rather than as a "jamming" substance. The drilling dust thus behaves in a liquid-like manner. In other words, the first and the second helical configuration (formed by the first groove and the first ridge on the one hand and the second groove and the second ridge on the other hand) ensure an optimum discharge in axial direction of the drilling dust that is produced upon insertion of the fixing device. The first ridge has a purely pressing function in this regard (the male screw thread presses into the concrete) in this regard, and the second ridge has a pressing function (the male screw thread presses into the concrete) in addition to a centring function.

In a preferred embodiment of a fixing device according to the invention, the helix angle of the first groove ranges between 20° and 30°.

In another preferred embodiment of a fixing device according to the invention, the helix angle of the second groove ranges between 20° and 30°.

Preferably, the helix angles of the two grooves range between 20° and 25°.

In another preferred embodiment of a fixing device according to the invention, the diameter of the helix of the first groove is smaller than the diameter of the helix of the second groove. More particularly, the diameters of the helices of the first groove and the second groove range between 75% and 96%, preferably between 89% and 96%, of the shank diameter. More in particular, the diameter of the helix of the second ridge ranges between 105% and 119%, preferably between 115% and 119%, of the shank diameter.

In another preferred embodiment of a fixing device according to the invention, the diameter of the helix of the first ridge ranges between 120% and 125% of the shank diameter.

In another preferred embodiment of a fixing device according to the invention, the first ridge and the second ridge are of V-shaped cross-section. More in particular, the sides of the first ridge include an angle of 45-55° with each other near the apex of said ridge. The sides of the second ridge preferably include an angle of 65-75° with each other near the apex of said ridge in that case.

In another preferred embodiment of a fixing device according to the invention, the fixing device is made of a material having a minimum hardness of at least Hrc 35.

The invention further relates to a method for securing a fixing device in a stone, concrete, metal or wooden substrate or the like, wherein a bore is formed in said substrate and the fixing device is inserted into said bore, wherein the fixing device according to the invention comprises a shank which is provided along at least part of its length with helical first and second grooves and helical first and second ridges extending along the circumferential surface thereof, which ridges extend radially with respect to the shank so as to form male screw thread, the first ridge being juxtaposed to the first groove and the second ridge being juxtaposed to the second groove, said first groove and said first ridge forming a first helical configuration and said second groove and said second ridge forming a second helical configuration, adjacent windings of the first and the second configuration being spaced apart by an intervening land, said first and said second ridge being raised relative to an intervening land and said first and said second groove being depressed relative to an intervening land, the diameter of the helix of the first ridge being larger than the diameter of the helix of the second ridge.

The invention will now be explained in more detail with reference to figures illustrated in a drawing, in which
- Fig. 1 is a schematic, perspective view of a preferred variant of the present fixing device;
- Fig. 2 is a cross-sectional view of the fixing device of Fig. 1.

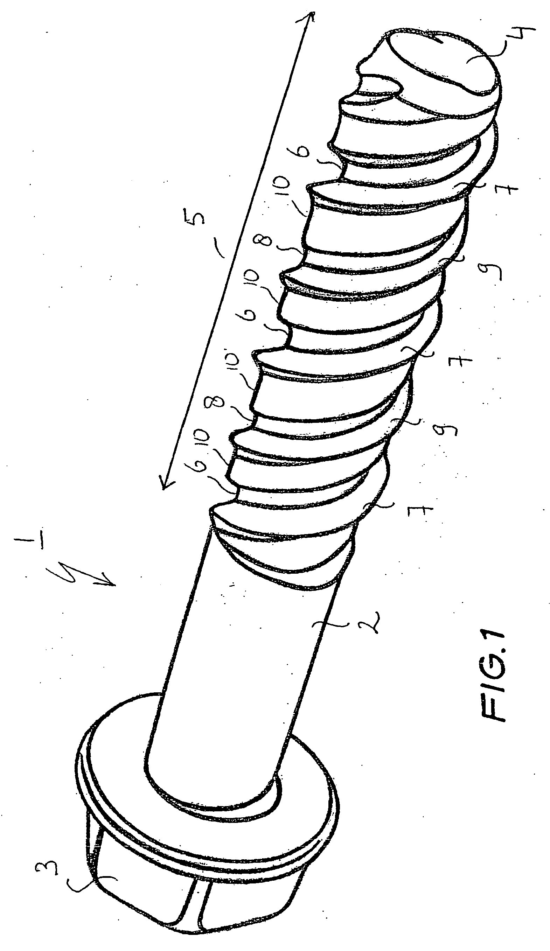

Fig. 1 shows a stainless steel fixing device 1 according to the invention, which can be inserted into a concrete wall, for example. To that end, a bore hole having a nominal diameter of 8 mm is drilled into the wall, after which the fixing device 1 is screwed into the bore hole. The fixing device 1 comprises a cylindrical shank 2 provided with a hexagonal head 3 at one end and a narrowed insertion portion 4 at the other end. The shank 2 has a diameter equal to 96-98% of the nominal external diameter of the bore hole. The shank 2 comprises two pairs of helical configurations along a portion 5 of its length, which configurations extend over the entire circumferential surface of said portion 5 of the shank 2. The first pair consists of a first helical groove 6 having a helix angle of about 25°, as well as a helical ridge 7 that extends radially with respect to the shank 3, which ridge is juxtaposed to (one side of) the groove 6. The second pair is comprised of a second helical groove 8 having a helix angle of about 25°, as well as a second helical ridge 9 juxtaposed to (one side of) the groove 6, which extends radially with respect to the shank 2. Both ridges 7, 9 form male (external) screw thread. Adjacent windings of the aforesaid configurations enclose an intervening land 10 between them. The ridges 7, 9 are raised relative to the intervening land 10 in question, whilst the grooves 6, 8 are depressed relative to the intervening land 10 in question. The dimension of the intervening land 10 must not exceed 3.99 mm at any time, based on a diameter of the shank 2 of about 8 mm.

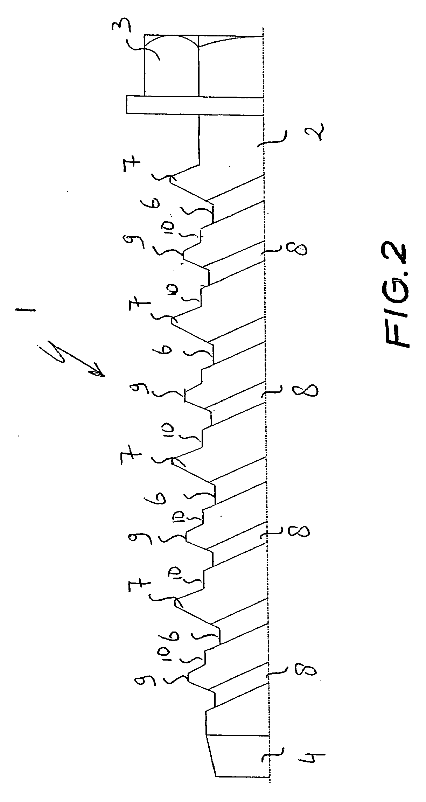

In Fig. 2, parts that correspond to parts that are shown in Fig. 1 are indicated by the same numerals as in Fig. 1. As Fig. 2 shows, the ridges 7, 9 are of V-shaped cross-section. The sides of the first ridge 7 include an angle of about 50° with each other near the apex of said ridge. The sides of the second ridge 9, on the other hand, include an angle of about 70° with each other near the apex of said ridge. The external diameter of the ridge 7 is about 20-25% larger than the shank diameter, whilst the external diameter of the ridge 9 is about 5-19% larger than the shank diameter. To increase the stability of the helices, the two ridges 7, 9 are flattened at their apexes.
The ridges 7, 9 contribute towards making it possible to screw the fixing device 1 into the bore hole in an optimally centred position, using a minimum driving moment, with the day drilling dust that is produced acting as a "lubricant". When the fixing device is subjected to an axial load, the shank 2 will be loaded evenly. The drilling dust will hardly be compressed in radial direction, so that the fixing device 1 can be inserted with a minimum amount of tension. This means that it is possible to use a minimal spacing between adjacent bore holes.

The invention is not limited to the embodiment as shown herein, it also extends to other variants that fall within the scope of the appended claims.

## Claims

1. A fixing device (1) intended for being secured in a stone, concrete, metal or wooden substrate or the like, which fixing device (1) can be inserted into a bore formed in said substrate, which fixing device (1) comprises a shank (2) which is provided along at least part (5) of its length with helical first and second grooves (6,8) and helical first and second ridges (7,9) extending along the circumferential surface thereof, which ridges (7,9) extend radially with respect to the shank (2) so as to form male screw thread, the first ridge (7) being juxtaposed to the first groove (6) and the second ridge (9) being juxtaposed to the second groove (8), said first groove (6) and said first ridge (7) forming a first helical configuration and said second groove (8) and said second ridge (9) forming a second helical configuration, adjacent windings of the first and the second configuration being spaced apart by an intervening land (10), said first and said second ridge (7,9) being raised relative to the intervening land (10) and said first and said second groove (6,8) being depressed relative to the intervening land (10), **characterized in that** the diameter of the helix of the first ridge (7) is larger than the diameter of the helix of the second ridge (9).

2. A fixing device (1) according to claim 1, wherein the diameter of the helix of the first groove (6) is smaller than the diameter of the helix of the second groove (8).

3. A fixing device (1) according to claim 2, wherein the diameters of the helices of the first groove (6) and the second groove (8) range between 75% and 96%, preferably between 89% and 96%, of the shank diameter.

4. A fixing device (1) according to claim 1, 2 or 3, wherein the diameter of the helix of the second ridge (9) ranges between 105% and 119%, preferably between 115% and 119%, of the shank diameter.

5. A fixing device (1) according to any one of the preceding claims 1-4, wherein the helix angle of the first groove (6) ranges between 20° and 30°.

6. A fixing device (1) according to any one of the preceding claims 1-5, wherein the helix angle of the second groove (8) ranges between 20° and 30°.

7. A fixing device (1) according to any one of the preceding claims 1-6, wherein the first ridge (7) and the second ridge (9) are of V-shaped cross-section.

8. A fixing device (1) according to claim 7, wherein the sides of the first ridge (7) include an angle of 45-55° with each other near the apex of said ridge (7).

9. A fixing device (1) according to claim 7 or 8, **characterized in that** the sides of the second ridge (9) preferably include an angle of 65-75° with each other near the apex of said ridge (9).

10. A fixing device (1) according to any one of the preceding claims 1-8, wherein the fixing device (1) is made of a material having a minimum hardness of at least Hrc 35.

11. A method for securing a fixing device (1) in a stone, concrete, metal or wooden substrate or the like, wherein a bore is formed in said substrate and the fixing device (1) is inserted into said bore, wherein the fixing device (1) comprises a shank (2) which is provided along at least part (5) of its length with helical first and second grooves (6,8) and helical first and second ridges (7,9) extending along the circumferential surface thereof, which ridges (7,9) extend radially with respect to the shank (2) so as to form male screw thread, the first ridge (7) being juxtaposed to the first groove (6) and the second ridge (9) being juxtaposed to the second groove (8), said first groove (6) and said first ridge (7) forming a first helical configuration and said second groove (8) and said second ridge (9) forming a second helical configuration, adjacent windings of the first and the second configuration being spaced apart by an intervening land (10), said first and said second ridge (7,9) being raised relative to the intervening land (10) and said first and said second groove (6,8) being depressed relative to the intervening land (10), **characterized by** the diameter of the helix of the first ridge (7) being larger than the diameter of the helix of the second ridge (9).

## Patentansprüche

1. Befestigungselement (1), das dazu bestimmt ist, in einem aus Stein, Beton, Metall oder Holz bestehenden Trägermaterial oder ähnlichem befestigt zu werden, wobei das Befestigungselement (1) in eine Bohrung eingesetzt werden kann, die in dem genannten Trägermaterial ausgebildet ist, wobei das Befestigungselement (1) einen Schaft (2) aufweist, der zumindest über einen Teil (5) seiner Länge mit schraubenförmigen ersten und zweiten Nuten (6, 8) und schraubenförmigen ersten und zweiten Erhöhungen (7, 9) versehen ist, die sich entlang von dessen Umfangsoberfläche erstrecken, wobei die genannten Erhöhungen (7, 9) sich in radialer Richtung in bezug auf den Schaft (2) erstrecken, so daß sie ein außenliegendes Schraubgewinde bilden, wobei die erste Erhöhung (7) angrenzend an die erste Nut (6) angeordnet ist und die zweite Erhöhung (9) angrenzend an die zweite Nut (8) angeordnet ist, wobei die genannte erste Nut (6) und die genannte erste Erhöhung (7) eine erste schraubenförmige Konfiguration bilden und die genannte zweite Nut (8) und die genannte zweite Erhöhung (9) eine zweite schraubenförmige Konfiguration bilden, wobei benachbarte Windungen der ersten und der zweiten Konfiguration durch eine dazwischen angeordnete Stegfläche (10) voneinander getrennt sind, wobei die genannte erste und die genannte zweite Erhöhung (7, 9) relativ zu der dazwischen angeordneten Stegfläche (10) erhöht sind und die genannte erste und die genannte zweite Nut (6, 8) relativ zu der dazwischen angeordneten Stegfläche (10) vertieft angeordnet sind, **dadurch gekennzeichnet, daß** der Durchmesser der Schraubenlinie der ersten Erhöhung (7) größer ist als der Durchmesser der Schraubenlinie der zweiten Erhöhung (9).

2. Befestigungselement (1) nach Anspruch 1, **dadurch gekennzeichnet, daß** der Durchmesser der Schraubenlinie der ersten Nut (6) kleiner ist als der Durchmesser der Schraubenlinie der zweiten Nut (8).

3. Befestigungselement (1) nach Anspruch 2, **dadurch gekennzeichnet, daß** die Durchmesser der Schraubenlinien der ersten Nut (6) und der zweiten Nut (8) sich in einem Bereich von zwischen 75% und 96%, in bevorzugter Weise zwischen 89% und 96%, des Schaftdurchmessers befinden.

4. Befestigungselement (1) nach Anspruch 1, 2 oder 3, **dadurch gekennzeichnet, daß** der Durchmesser der Schraubenlinie der zweiten Erhöhung (9) sich in einem Bereich von zwischen 105% und 119%, in bevorzugter Weise zwischen 115% und 119%, des Schaftdurchmessers befindet.

5. Befestigungselement nach einem der vorangehenden Ansprüche 1 bis 4, **dadurch gekennzeichnet, daß** der Winkel der Schraubenlinie der ersten Nut (6) in einem Bereich zwischen 20° und 30° liegt.

6. Befestigungselement (1) nach einem der vorangehenden Ansprüche 1 bis 5, **dadurch gekennzeichnet, daß** der Winkel der Schraubenlinie der zweiten Nut (8) in einem Bereich zwischen 20° und 30° liegt.

7. Befestigungselement (1) nach einem der vorangehenden Ansprüche 1 bis 6, **dadurch gekennzeichnet, daß** die erste Erhöhung (7) und die zweite Erhöhung (9) einen V-förmigen Querschnitt aufweisen.

8. Befestigungselement (1) nach Anspruch 7, **dadurch gekennzeichnet, daß** die Seiten der ersten Erhöhung (7) einen Winkel von 45° bis 55° in der Nähe des Scheitelpunkts der genannten Erhöhung (7) miteinander bilden.

9. Befestigungselement (1) nach Anspruch 7 oder 8, **dadurch gekennzeichnet, daß** die Seiten der zweiten Erhöhung (9) in bevorzugter Weise einen Winkel von 65° bis 75° in der Nähe des Scheitelpunkts der genannten Erhöhung (9) miteinander einschließen.

10. Befestigungselement (1) nach einem der vorangehenden Ansprüche 1 bis 8, **dadurch gekennzeichnet, daß** das Befestigungselement (1) aus einem Material hergestellt ist, welches eine minimale Härte von zumindest Hrc 35 aufweist.

11. Verfahren zum Anbringen eines Befestigungselements (1) in einem aus Stein, Beton, Metall oder Holz bestehenden Trägermaterial oder ähnlichem, wobei eine Bohrung in dem genannten Trägermaterial ausgebildet wird und das Befestigungselement (1) in die genannte Bohrung eingesetzt wird, wobei das Befestigungselement (1) einen Schaft (2) aufweist, der zumindest über einen Teil (5) seiner Länge mit schraubenförmigen ersten und zweiten Nuten (6, 8) und schraubenförmigen ersten und zweiten Erhöhungen (7, 9) versehen ist, die sich entlang von dessen Umfangsoberfläche erstrecken, wobei die genannten Erhöhungen (7, 9) sich in radialer Richtung in bezug auf den Schaft (2) erstrecken, so daß sie ein außenliegendes Schraubgewinde bilden, wobei die erste Erhöhung (7) angrenzend an die erste Nut (6) angeordnet ist und die zweite Erhöhung (9) angrenzend an die zweite Nut (8) angeordnet ist, wobei die genannte erste Nut (6) und die genannte erste Erhöhung (7) eine erste schraubenförmige Konfiguration bilden und die genannte zweite Nut (8) und die genannte zweite Erhöhung (9) eine zweite schraubenförmige Konfiguration bilden, wobei benachbarte Windungen der ersten und der zweiten Konfiguration durch eine dazwischen angeordnete Stegfläche (10) voneinander getrennt sind, wobei die genannte erste und die genannte zweite Erhöhung (7, 9) relativ zu der dazwischen angeordneten Stegfläche (10) erhöht sind und die genannte erste und die genannte zweite Nut (6, 8) relativ zu der dazwischen angeordneten Stegfläche (10) vertieft angeordnet sind, **dadurch gekennzeichnet, daß** der Durchmesser der Schraubenlinie der ersten Erhöhung (7) größer ist als der Durchmesser der Schraubenlinie der zweiten Erhöhung (9).

## Revendications

1. Dispositif de fixation (1) destiné à être fixé dans un substrat de pierre, de béton, de métal ou de bois ou analogue, le dispositif de fixation (1) pouvant être inséré dans un trou formé dans le substrat, le dispositif de fixation (1) comprenant une tige (2) qui est munie, sur une partie au moins (5) de sa longueur, de première et seconde gorges (6, 8) en hélice et de première et seconde arêtes (7, 9) en hélice s'étendant suivant sa surface circonférentielle, les arêtes (7, 9) s'étendant radialement par rapport à la tige (2) pour former un filetage, la première arête (7) étant juxtaposée à la première gorge (6) et la seconde arête (9) étant juxtaposée à la seconde gorge (8), la première gorge (6) et la première arête (7) formant une première configuration en hélice et la seconde gorge (8) et la seconde arête (9) formant une seconde configuration en hélice, les spires adjacentes de la première et de la seconde configuration étant séparées par une portée intermédiaire (10), les première et seconde arêtes (7, 9) étant en saillie par rapport à la portée intermédiaire (10), et les première et seconde gorges (6, 8) étant en creux par rapport à la portée intermédiaire (10), **caractérisé en ce que** le diamètre de l'hélice de la première arête (7) est supérieur au diamètre de l'hélice de la seconde arête (9).

2. Dispositif de fixation (1) selon la revendication 1, dans lequel le diamètre de l'hélice de la première gorge (6) est inférieur au diamètre de l'hélice de la seconde gorge (8).

3. Dispositif de fixation (1) selon la revendication 2, dans lequel les diamètres des hélices de la première gorge (6) et de la seconde gorge (8) sont compris entre 75 % et 96 %, de préférence entre 89 % et 96 %, du diamètre de la tige.

4. Dispositif de fixation (1) selon la revendication 1, 2 ou 3, dans lequel le diamètre de l'hélice de la seconde arête (9) est compris entre 105 % et 119 %, de préférence entre 115 % et 119 %, du diamètre de la tige.

5. Dispositif de fixation (1) selon l'une quelconque des revendications précédentes 1 à 4, dans lequel l'angle d'hélice de la première gorge (6) est compris entre 20' et 30°.

6. Dispositif de fixation (1) selon l'une quelconque des revendications précédentes 1 à 5, dans lequel l'angle d'hélice de la seconde gorge (8) est compris entre 20 et 30°.

7. Dispositif de fixation (1) selon l'une quelconque des revendications précédentes 1 à 6, dans lequel la première arête (7) et la seconde arête (9) ont une section en V.

8. Dispositif de fixation (1) selon la revendication 7, dans lequel les côtés de la première arête (7) forment un angle inclus de 45 à 55' l'un avec l'autre près du sommet de l'arête (7).

9. Dispositif de fixation (1) selon la revendication 7 ou 8, **caractérisé en ce que** les côtés de la seconde arête (9) forment de préférence un angle inclus de 65 à 75° l'un avec l'autre près du sommet de l'arête (9).

10. Dispositif de fixation (1) selon l'une quelconque des revendications précédentes 1 à 8, dans lequel le dispositif de fixation (1) est formé d'un matériau ayant une dureté minimale d'au moins 35 Hrc.

11. Procédé de fixation d'un dispositif de fixation (1) dans un substrat de pierre, de béton, de métal ou de bois ou analogue, dans lequel un trou est formé dans le substrat et le dispositif de fixation (1) est inséré dans le trou, dans lequel le dispositif de fixation (1) comporte une tige (2) qui est munie, le long d'une partie au moins (5) de sa longueur, de première et seconde gorges (6, 8) en hélice et de première et seconde nervures (7, 9) en hélice qui s'étendent à sa surface circonférentielle, les nervures (7, 9) s'étendant radialement par rapport à la tige (2) pour former un filetage, la première nervure (7) étant juxtaposée à la première gorge (6) et la seconde nervure (9) étant juxtaposée à la seconde gorge (8), la première gorge (6) et la première nervure (7) formant une première configuration en hélice et la seconde gorge (8) et la seconde nervure (9) formant une seconde configuration en hélice, les spires adjacentes des première et seconde configurations étant espacées par une portée intermédiaire (10), les première et seconde arêtes (7, 9) étant en saillie par rapport à la portée intermédiaire (10) et les première et seconde gorges (6, 8) étant en creux par rapport à la portée intermédiaire (10), **caractérisé en ce que** le diamètre de l'hélice de la première nervure (7) est supérieur au diamètre de l'hélice de la seconde nervure (9).
